# EUROPÄISCHE PATENTSCHRIFT

(11) **EP 2 812 837 B1**
(45) Veröffentlichungstag und Bekanntmachung des Hinweises auf die Patenterteilung: **01.05.2019**
(21) Anmeldenummer: 13701946.9
(22) Anmeldetag: 18.01.2013
(51) Int. Cl.: G06F 21/57, G06F 21/44, G06F 21/70, G06Q 50/06, H04W 4/20, H04W 12/06

(54) **VERFAHREN ZUR PERSONALISIERUNG EINES SMART METER ODER SMART METER GATEWAY SICHERHEITSMODULS**
METHOD FOR PERSONALIZING A SECURITY MODULE FOR A SMART METER OR SMART METER GATEWAY
PROCÉDÉ DE PERSONNALISATION D'UN MODULE DE SÉCURITÉ POUR COMPTEUR INTELLIGENT OU POUR PASSERELLE DE COMPTEUR INTELLIGENT

(30) Priorität: 07.02.2012 DE 102012201810; 02.03.2012 DE 102012203354
(43) Veröffentlichungstag der Anmeldung: 17.12.2014
(73) Patentinhaber: Bundesdruckerei GmbH, 10969 Berlin (DE)
(72) Erfinder: DIETRICH, Frank, 12437 Berlin (DE); PAESCHKE, Manfred, 16348 Wandlitz (DE)
(74) Vertreter: Richardt Patentanwälte PartG mbB
(86) Internationale Anmeldenummer: PCT/EP2013/050896
(87) Internationale Veröffentlichungsnummer: WO 2013/117404

(56) Entgegenhaltungen:
- US-A1- 2007 138 657
- US-B1- 7 830 021
- BARRIGA L ET AL: "M2M Remote-Subscription Management", INTERNET CITATION, 2. Mai 2011 (2011-05-02), Seiten 1-6, XP002686983, Gefunden im Internet: URL:http://www.ericsson.com/res/thecompany /docs/publications/ericsson_review/2011/m2 m_remotesubscriptions.pdf [gefunden am 2012-11-12]
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V9.2.0, 22. Juni 2010 (2010-06-22), Seiten 1-87, XP050441986, [gefunden am 2010-06-22]
- "ETSI TS 102 689 V1.1.1 Machine-to-Machine communications (M2M); M2M service requirements", , 3. August 2010 (2010-08-03), XP055058237, Gefunden im Internet: URL:http://www.etsi.org/deliver/etsi_ts/10 2600_102699/102689/01.01.01_60/ts_102689v0 10101p.pdf [gefunden am 2013-04-02]
- "ETSI TS 102 690 V1.1.1 Machine-to-Machine communications (M2M); Functional architecture", , 1. Oktober 2011 (2011-10-01), XP055057930, Gefunden im Internet: URL:http://www.etsi.org/deliver/etsi_ts/10 2600_102699/102690/01.01.01_60/ts_102690v0 10101p.pdf [gefunden am 2013-03-27]
- "ETSI TS 102 691 V1.1.1 Machine-to-Machine communications (M2M); Smart Metering Use Cases", , 18. Mai 2010 (2010-05-18), XP055058238, Gefunden im Internet: URL:http://www.etsi.org/deliver/etsi_tr/10 2600_102699/102691/01.01.01_60/tr_102691v0 10101p.pdf [gefunden am 2013-04-02]
- COOPER NIST S SANTESSON MICROSOFT S FARRELL TRINITY COLLEGE DUBLIN S BOEYEN ENTRUST R HOUSLEY VIGIL SECURITY W POLK NIST D: "Internet X.509 Public Key Infrastructure Certificate and Certificate Revocation List (CRL) Profile; rfc5280.txt", INTERNET X.509 PUBLIC KEY INFRASTRUCTURE CERTIFICATE AND CERTIFICATE REVOCATION LIST (CRL) PROFILE; RFC5280.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 May 2008 (2008-05-01), XP015057243,
- "ETSI TS 122 022 V10.0.0", , 11 May 2011 (2011-05-11), XP055060516, Retrieved from the Internet: URL:http://www.etsi.org/deliver/etsi_ts/12 2000_122099/122022/10.00.00_60/ts_122022v1 00000p.pdf [retrieved on 2013-04-22]

## Beschreibung

Die Erfindung betrifft ein Verfahren zur Personalisierung eines Smart Meter oder Smart Meter Gateway Sicherheitsmoduls, sowie ein Computerprogrammprodukt.

Unter dem Begriff des "Smart Metering" wird allgemein der Gedanke verstanden, Kunden mit elektronischen Energieverbrauchserfassungsgeräten auszustatten, um so neben einer einfachen Erfassung der verbrauchten Energiemenge zum Beispiel über ein Netzwerk sowohl dem Kunden als auch dem Energieversorger weitere Funktionalitäten zur Verfügung zu stellen.

Möglich ist dabei, dass sich der Kunde in Echtzeit über seinen aktuellen Energieverbrauch informieren kann. Unter dem Begriff des "Energieverbrauchs" wird dabei der Verbrauch des Kunden bezüglich jeglicher Art von Energie verstanden, welche in Haushalte und Unternehmen geliefert wird. Dies umfasst neben den Energieformen Strom, Wasser und Gas auch beliebige weitere Energieformen wie beispielsweise Fernwärme.

Zur Erfassung des Energieverbrauchs kommen beim jeweiligen Verbraucher intelligente Messsysteme, auch intelligente Zähler oder "Smart-Meter" genannt, zum Einsatz. Smart-Meter sind Zähler für die verbrauchte Energie. Der Verbraucher kann dabei eine natürliche oder juristische Person sein, welche verschiedene messbare Energieformen wie Strom, Gas, Wasser oder Wärme verbraucht. Ziel der Verwendung von Smart-Metern ist die Implementierung intelligenter Messsysteme, was beispielsweise die Erhebung von variablen Leistungsentgelten in Abhängigkeit von Gesamtnachfrage und Netzauslastung ermöglichen würde. Dadurch können sich Energieversorgungsnetze insgesamt besser ausnutzen lassen.

Aus der technischen Richtlinie des BSI TR-03109 ist es bekannt, einen sogenannten Smart-Meter-Gateway, auch Konzentrator genannt, als eine zentrale Kommunikationseinheit vorzusehen, welche mit einzelnen oder mehreren Smart-Metern kommunizieren kann. Der Gateway ist dazu in der Lage, mit Geräten im sogenannten "Home Area Network" und mit Geräten im "Wide Area Network" zu kommunizieren. Das Home Area Network umfasst dabei alle Smart Meter, welche an den Gateway angekoppelt sind, sowie z.B. private Recheneinheiten der Verbraucher. Die privaten Recheneinheiten können z.B. zur Information über aktuelle, mit den Smart Metern erfasste Energieverbrauchswerte, eingesetzt werden. Das Wide Area Network ist dazu ausgebildet, um eine Kommunikation von Gateway und autorisierten Marktteilnehmern zu ermöglichen. Beispielsweise kann das Gateway die Daten aller Smart-Meter sammeln und diese an eine übergeordnete Sammelstelle, beispielsweise einen Energieversorger oder einen Messstellenbetreiber zur Verfügung stellen.

BARRIGAL ET AL: "M2M Remote-Subscription Management", INTERNET CITATION, 2. Mai 2011, Seiten 1-6, beschreibt Maschine-zu-Maschine(M2M)-Kommunikations-Identitätsmodule und deren Anwendung. Insbesondere werden Möglichkeiten zur Fernwartung solcher Module beschrieben.

"3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, Nr. V9.2.0, 22. Juni 2010, Seiten 1-87, beschreibt Sicherheitsaspekte und Möglichkeiten zur Fernwartung von M2M-Geräten.

"ETSI TS 102 689 V1.1.1 Machine-to-Machine communications (M2M); M2M service requirements", 3. August 2010, beschreibt als technische Richtlinie des Europäische Institut für Telekommunikationsnormen Anforderungen an M2M-Dienste. "ETSI TS 102 690 V1.1.1 Machine-to-Machine communications (M2M); Functional architecture", 1. Oktober 2011, beschreibt als technische Richtlinie des Europäische Institut für Telekommunikationsnormen Anforderungen an eine M2M-Architektur. "ETSI TS 102 691 V1.1.1 Machine-to-Machine communications (M2M); Smart Metering Use Cases", 18. Mai 2010, beschreibt als technische Richtlinie des Europäische Institut für Telekommunikationsnormen Anwendungsfälle für Smart Meter. "ETSI TS 122 022 V10.0.0 Digital cellular telecommunications system (Phase 2+); Universal Mobile Telecommunications System (UMTS); LTE; Personalisation of Mobile Equipment (ME); Mobile functionality specification", 11. Mai 2011, beschreibt als technische Richtlinie des Europäische Institut für Telekommunikationsnormen Funktionsspezifikationen zum Personalisieren von mobilen Geräten für GSM- und 3G-Systeme.

"Internet X.509 Public Key Infrastructure Certificate and Certificate Revocation List (CRL) Profile" beschreibt das X.509-v3-Zertifikat und die X.509-v2-Zertifikat-Sperrliste zur Verwendung im Internet.

Die US 7 830 021 B1 beschreibt eine manipulationssichere Halbleitervorrichtung, welche eine Oberfläche mit elektrischen Flip-Chip-Kontakten umfasst. Ein Flip-Chip-Halbleiter umfasst einen elektrischen Flip-Chip-Kontakt. Der Flip-Chip-Halbleiter hat eine maximale Temperatur, der er ausgesetzt werden kann, bevor er beschädigt wird. Flip-Chip-Lötverbindungen koppeln und verbinden die elektrischen Flip-Chip-Kontakte des Flip-Chip-Halbleiters elektrisch mit den elektrischen Flip-Chip-Kontakten der Oberfläche. Die Flip-Chip-Lötstellen sind aus einer Legierung gebildet, die einen höheren Schmelzpunkt als die maximale Temperatur aufweist, so dass das Entfernen des Flip-Chip-Halbleiters von der Oberfläche durch Erwärmen die Funktionalität des Flip-Chip-Halbleiters zerstört.

US 2007/138657 A1 beschreibt eine physikalisch sichere Verarbeitungsanordnung, die auf einem Substrat montierte Chips enthält, um die elektrischen Kontakte der Chips zwischen den Chips und dem Substrat einzubetten. Das Substrat ist mit Substratkontakten und leitenden Bahnen versehen, die elektrisch mit den Chipkontakten verbunden sind und sich durch das Substrat erstrecken. Elektrische Leiter umgeben die leitenden Pfade. Eine Überwachungsschaltung detektiert eine Unterbrechung der Kontinuität von einem oder mehreren der elektrischen Leiter und macht die Anordnung funktionsunfähig.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Es wird ein Verfahren zur Personalisierung eines Smart Meter Sicherheitsmoduls oder Smart Meter Gateway Sicherheitsmoduls durch ein erstes Computersystem angegeben, wobei durch das Smart Meter energieverbrauchsspezifische Messdatenelemente erfassbar sind, wobei das Sicherheitsmodul kryptografische Funktionen zur Durchführung einer kryptografisch verschlüsselten Kommunikation der von dem Smart Meter oder dem Smart Meter Gateway empfangenen Messdatenelemente mit einem zweiten Computersystem eines Energieversorgers und/oder Messstellenbetreibers aufweist, wobei dem Sicherheitsmodul eine eindeutige Kennung zugeordnet ist, wobei das Verfahren die Schritte umfasst:
- Bereitstellen des Sicherheitsmoduls,
- Speicherung der Kennung in dem Sicherheitsmodul,
- Erzeugung eines asymmetrischen kryptografischen Schlüsselpaares durch das erste Computersystem und Speicherung des Schlüsselpaares in dem Sicherheitsmodul,
- Signierung des öffentlichen Schlüssels des Schlüsselpaars und der Kennung zum Erhalt eines Zertifikats und Speicherung des Zertifikats in dem Sicherheitsmodul, wobei die Signierung durch das erste Computersystem erfolgt, wobei das Sicherheitsmodul so ausgebildet ist, dass nach der Speicherung des Schlüsselpaars ein initialer Kommunikationszugriff auf den Smart Meter und/oder den Smart Meter Gateway ausschließlich für das erste Computersystem möglich ist, wobei erst durch den initialen Kommunikationszugriff durch das erste Computersystem das Sicherheitsmodul zur Kommunikation mit dem zweiten Computersystem freigeschaltet werden kann
- Einbau des Sicherheitsmoduls in den Smart Meter oder den Smart Meter Gateway, wobei aufgrund des Einbaus ein irreversibler Bindungsprozess zwischen dem Sicherheitsmodul und dem Smart Meter oder den Smart Meter Gateway erfolgt, wobei aufgrund des Verbindens des Sicherheitsmoduls mit dem Smart Meter oder dem Smart Meter Gateway ein Verknüpfungsprozess auf
- dem Smart Meter oder dem Smart Meter Gateway gestartet wird, wobei durch den Verknüpfungsprozess eine untrennbare logische Verknüpfung zwischen dem Sicherheitsmodul und dem Smart Meter oder dem Smart Meter Gateway hergestellt wird, wobei die untrennbare logische Verknüpfung einen irreversiblen Kopiervorgang des Zertifikats und/oder der eindeutigen Kennung des Sicherheitsmoduls auf einen Speicherbereich des Smart Meters oder des Smart Meter Gateways umfasst.

Ausführungsformen der Erfindung könnten den Vorteil haben, dass durch den Initialisierungsvorgang in sicherer, eindeutiger und nachvollziehbarer Weise eine Möglichkeit bereitgestellt werden kann, welche eine sichere Kommunikation zwischen dem Smart-Meter und einem autorisierten Marktteilnehmer wie einem Energieversorger oder einem Messstellenbetreiber ermöglicht. Vorzugsweise handelt es sich dabei bei dem ersten Computersystem um ein Computersystem einer vertrauenswürdige
dem Smart-Meter und einem autorisierten Marktteilnehmer wie einem Energieversorger oder einem Messstellenbetreiber ermöglicht. Vorzugsweise handelt es sich dabei bei dem ersten Computersystem um ein Computersystem einer vertrauenswürdigen Instanz, weiche auch als "Trust Center" oder "Trusted Service Manager" oder "TSM" bezeichnet wird.

Das Sicherheitsmodul ist in seinem initialisierten zustand so konfiguriert, dass ausschließlich diese vertrauenswürdige Instanz des ersten Computersystems in der Lage ist, eine Kommunikation nach erfolgreicher Authentifizierung mit dem Sicherheitsmodul durchzuführen. Dadurch ist gewährleistet, dass z.B. eine entgeltrelevante Konfiguration des Smart-Meterings nur einer solchen Stelle überlassen wird, welche sowohl von den autorisierten Markteilnehmern, das heißt zum Beispiel den Messstellenbetreibern und den eigentlichen Energieversorgern, als auch den Endverbrauchern als vertrauenswürdig eingestuft ist. Unter "entgeltrelevante Konfiguration" wird im Folgenden verstanden, dass durch diese Konfiguration bezüglich eines Smart-Meters festgelegt wird, wer zum Beispiel zur Abrechnung der durch das Smart-Meter erfassten Energiemengen berechtigt ist. Ferner kann dadurch auch festgelegt werden, welche Personen wie Endverbraucher und autorisierte Marktteilnehmer in welchem Umfang auf die Funktionen und bezüglich des Smart Meters verfügbaren Informationen überhaupt Zugriff haben dürfen. Da diese Festlegung von Seitens einer vertrauenswürdigen Stelle erfolgt, ist dadurch gewährleistet, dass ein Missbrauch dieser Funktionen und Informationen durch unbefugte Dritte ausgeschlossen ist. Die Informationen können dabei z.B. Standortinformationen des Smart Meters, durch das Smart Meter gemessene Werte, Standortinformationen des Speicherbereichs oder jegliche im Speicherbereich enthaltene Werte umfassen.

Grundsätzlich ist es unerheblich, durch wen das Sicherheitsmodul bereitgestellt wird, d.h. ob es sich hierbei um eine vertrauenswürdige Instanz handelt oder nicht. Ferner ist es grundsätzlich unerheblich, ob der eigentliche Speichervorgang durch eine vertrauenswürdige Instanz durchgeführt wird oder nicht. Das Sicherheitsmodul weist in seinem Auslieferungszustand bei der Bereitstellung des Sicherheitsmoduls zunächst keinerlei Schlüsselmaterial auf. Eine unbefugte Person könnte also mit dem Sicherheitsmodul nichts anfangen, da hiermit aufgrund mangelnder Zertifikate keinerlei durch das erste Computersystem autorisierte kryptografische Operationen durchgeführt werden können. Lediglich beim Speichern des privaten Schlüssels des asymmetrischen kryptografischen Schlüsselpaares muss sichergestellt sein, dass eine hierfür notwendige Kommunikation zwischen Sicherheitsmodul und erstem Computersystem abhörsicher erfolgt.

Selbst nach der Speicherung dieser Daten in dem Sicherheitsmodul ist dieses für unbefugte Personen wertlos, denn eine Kommunikation mit dem Sicherheitsmodul kann ausschließlich das erste Computersystem durchführen, um damit z.B. die besagten Konfigurationen aufzuspielen oder durchzuführen.

Erfindungsgemäß ist dem Sicherheitsmodul eine eindeutige Kennung zugeordnet, wobei das Verfahren ferner den Schritt der Speicherung der Kennung in dem Sicherheitsmodul umfasst, wobei die Signierung eine Signierung der Kennung umfasst. Dies hat den Vorteil, dass z.B. anhand der Kennung später beim Betrieb des Sicherheitsmoduls zur Übermittlung von Energieverbrauchsdaten an Messstellenbetreiber oder Energieversorger eindeutig das Sicherheitsmodul und damit der Endverbraucher identifiziert werden kann. Kommt hierzu noch eine irreversible automatische Bindung des Sicherheitsmoduls an den Smart Meter und/oder den Gateway unter Verwendung der Kennung, kann auch Smart Meter und/oder Gateway eindeutig identifiziert werden. Das "Vortäuschen" eines anderen Smart Meters oder Gateways wird damit zuverlässig verhindert.

Somit ist gemäß eines weiteren Beispiels die Kennung eines Speicherbereichs, welcher dem Smart Meter direkt oder indirekt über einen Gateway zugeordnet ist, durch eine Kennung des Sicherheitsmoduls gegeben. Dadurch wird gewährleistet, dass Sicherheitsmodul und Speicherbereich untrennbar miteinander verknüpft sind. Einer eindeutigen Adressierung des Sicherheitsmoduls entspricht damit einer eindeutigen Adressierung des Speicherbereichs. Befindet sich der Speicherbereich in einem Smart-Meter-Gateway, so ist dadurch sichergestellt, dass nicht nachträglich in unbefugter Weise der Gateway durch einen anderen Gateway ersetzt werden kann. Beispielsweise könnte dadurch unterbunden werden, dass einem Messstellenbetreiber Werte von einem "gehackten" Gateway zur Verfügung gestellt werden, welcher nur sporadisch mit entsprechenden Smart-Metern verbunden ist und damit eigentlich überhaupt keine reale Energieverbrauchserfasbesagte Speicherbereich kann ausschließlich über das Sicherheitsmodul durch das erste Computersystem beschrieben werden und eine Adressierung dieses Speicherbereichs ist aufgrund der Kennung eindeutig. Die Verwendung eines anderen Gateways mit anderem Speicherbereich wäre in diesem Fall also grundsätzlich unmöglich, da ein Aufspielen der zur Energieerfassung relevanten Daten seitens des ersten Computersystems nie stattfinden würde.

Nach einer Ausführungsform der Erfindung handelt es sich bei der Kennung des Sicherheitsmoduls um einen öffentlichen Schlüssel des Sicherheitsmoduls oder eine IPv6-Adresse des Sicherheitsmoduls. Die Verwendung des öffentlichen Schlüssels des Sicherheitsmoduls als Kennung des Sicherheitsmoduls und damit als Kennung des Speicherbereichs hat den Vorteil, dass dadurch ein GUID (Globally Unique Identifier) bereitgestellt werden kann, welcher mit nahezu absolut sicherer Wahrscheinlichkeit eindeutig ist. Dies würde eine einfache Verwaltung der Kennungen durch einfache Vergabe eines möglichst langen öffentlichen Schlüssels ermöglichen. Im Falle dessen es sich bei der Kennung des Sicherheitsmoduls um eine IPv6-Adresse handelt, wäre es in einfacher Weise möglich, über bestehende Netzwerke eine eindeutige Adressierung des Sicherheitsmoduls vorzunehmen.

Nach einer weiteren Ausführungsform der Erfindung beinhaltet das Zertifikat den öffentlichen Schlüssel des Sicherheitsmoduls und die Kennung. Dieser öffentliche Schlüssel ist dabei einem privaten Schlüssel zugeordnet, welcher in einem geschützten Speicherbereich im Sicherheitsmodul gespeichert ist. Das Zertifikat kann nach einem Public Key Infrastructure (PKI)-Standard erstellt worden sein, beispielsweise nach dem X.509-Standard.

Erfindungsgemäß umfasst das Verfahren ferner den Schritt des Einbaus des Sicherheitsmoduls in den Smart Meter oder den Smart Meter Gateway, wobei aufgrund des Einbaus ein irreversibler und untrennbarer Bindungsprozess zwischen dem Sicherheitsmodul und dem Smart Meter oder den Smart Meter Gateway erfolgt. Unter "untrennbar" oder "irreversibel" wird dabei eine dauerhafte Verknüpfung von Sicherheitsmodul und Smart-Meter oder Smart-Meter-Gateway verstanden, welche eine Funktionsfähigkeit des Sicherheitsmoduls gewährleistet. Sobald versucht wird, das Sicherheitsmodul vom Smart-Meter oder dem Smart-Meter-Gateway zu entfernen, geht das Sicherheitsmodul in einen unbrauchbaren, d.h. funktionsunfähigen Zustand über. Dies kann entweder durch eine elektronische Selbstzerstörung, Selbstdeaktivierung oder eine physikalische Zerstörung oder Deaktivierung des Sicherheitsmoduls gewährleistet sein. Im einfachsten Fall könnte das Sicherheitsmodul in einem Gehäuse des Smart-Meters oder Smart-Meter-Gateways eingegossen sein, sodass aufgrund des "Aufbrechens" dieser Gussverbindung die Zerstörung des Sicherheitsmoduls resultiert.

Aufgrund des Verbindens des Sicherheitsmoduls mit dem Smart-Meter oder dem Smart-Meter-Gateway wird ein Verknüpfungsprozess auf dem Smart-Meter oder dem Smart-Meter-Gateway gestartet, wobei durch den Verknüpfungsprozess eine untrennbare logische Verknüpfung zwischen dem Sicherheitsmodul und dem Smart-Meter oder dem Smart-Meter-Gateway hergestellt wird. Diese untrennbare logische Verknüpfung umfasst einen irreversiblen Kopiervorgang des Zertifikats und/oder der Kennung des Sicherheitsmoduls auf einen dem Smart Meter oder dem Gateway zugeordneten Speicherbereich.

Nach einer Ausführungsform der Erfindung ist das erste Computersystem Teil einer geschützten und geschlossenen ersten Automatisierungseinrichtung, wobei
- die Speicherung des Schlüsselpaares und/oder des Zertifikats und/oder der Kennung auf dem Sicherheitsmodul ebenfalls in der ersten Automatisierungseinrichtung erfolgt oder
- die Speicherung des Schlüsselpaares und/oder des Zertifikats und/oder der Kennung auf dem Sicherheitsmodul in einer zweiten geschlossenen Automatisierungseinrichtung erfolgt, wobei in diesem Fall das asymmetrische kryptografische Schlüsselpaar und/oder die Signatur und/oder die Kennung von der ersten Automatisierungseinrichtung an die zweite Automatisierungseinrichtung über eine verschlüsselte Kommunikationsverbindung übertragen wird.

Vorzugsweise handelt es sich bei der geschützten und geschlossenen ersten Automatisierungseinrichtung um einen Trust Center. Das Trustcenter ist dabei definiert als eine vertrauenswürdige Instanz der Sicherheitsinfrastruktur (PKI), die Sicherheitsleistungen für Anwender und Kommunikationspartner erbringt. Ein Trustcenter kann grundsätzlich Funktionen einer Zertifizierungsstelle oder eines Schlüsselmanagement-Centers übernehmen. Im Rahmen der vorliegenden Beschreibung ist jedoch entscheidend, dass es sich bei der ersten Automatisierungseinrichtung um eine Ansammlung von Komponenten handelt, welche die Erzeugung des asymmetrischen Schlüsselpaares und des Zertifikats in einer geschützten und räumlich geschlossenen Automatisierungsumgebung vornehmen. Dies bedeutet ferner, dass innerhalb der ersten Automatisierungseinrichtung die Komponenten in vordefinierter Weise zusammenwirken, zentral gesteuert und kontrolliert werden können. Selbiges gilt für die besagte zweite geschlossene Automatisierungseinrichtung. Beide Automatisierungseinrichtungen sind deshalb als getrennt oder "räumlich getrennt" zu betrachten, da keine zentrale Steuermöglichkeit besteht, welche die jeweiligen Automatisierungsvorgänge in den beiden Automatisierungseinrichtungen kontrollieren könnte.

Nach einer Ausführungsform der Erfindung erfolgt der Einbau des Sicherheitsmoduls in den Smart Meter oder den Smart Meter Gateway innerhalb der zweiten Automatisierungseinrichtung. Der Einbau muss also nicht innerhalb der ersten Automatisierungseinrichtung oder durch die erste Automatisierungseinrichtung erfolgen. Damit können in unkomplizierter Weise eine Vielzahl von Sicherheitsmodulen durch Speicherung von Schlüsseln und Zertifikaten vorbereitet werden, um zu einem beliebigen späteren Zeitpunkt an einem beliebigen Ort mit der Hardware "Smart Meter" oder "Smart Meter Gateway" logisch verknüpft zu werden. Nichtsdestotrotz ist gewährleistet, dass auch zu diesem späteren Zeitpunkt sichergestellt ist, dass eine Freischaltung einer Kommunikation mit dem zweiten Computersystem ausschließlich durch das erste Computersystem erfolgen kann.

Nach einer Ausführungsform der Erfindung wird das Sicherheitsmodul in Form einer Chipkarte bereitgestellt. Es wird also das Sicherheitsmodul in Form einer Chipkarte durch den Betreiber des ersten Computersystems vorkonfiguriert, indem auf der Chipkarte diejenige Informationen gespeichert werden, welche es ermöglichen, eine Authentifizierung des ersten Computersystems gegenüber dem Sicherheitsmodul zur späteren Durchführung eines Initialisierungsvorgangs oder Freischaltevorgangs zu ermöglichen.

Nach einer Ausführungsform der Erfindung ist das bereitgestellte Sicherheitsmodul unpersonalisiert, wobei erst aufgrund der Speicherung des Schlüsselpaares und/oder des Zertifikats in dem Sicherheitsmodul eine Personalisierung des Sicherheitsmoduls erfolgt. Der Begriff der "Personalisierung" beschreibt dabei die eindeutige Festlegung von Merkmalen, welche das Sicherheitsmodul einzigartig machen und dieses eindeutig gegenüber anderen Sicherheitsmodulen unterscheiden.

Nach einer weiteren Ausführungsform der Erfindung umfasst das Verfahren ferner den Schritt der Speicherung von Kontaktinformationen des ersten Computersystems in dem Sicherheitsmodul, wobei durch die Kontaktinformationen die Festlegung der Beschränkung des initialen Kommunikationszugriffs ausschließlich auf das erste Computersystem erfolgt. Somit wird beim Speichervorgang auch gleichzeitig eindeutig festgelegt, dass das erste Computersystem ausschließlich für die initiale Kontaktaufnahme mit dem Sicherheitsmodul freigeschaltet ist. Alle anderen Computersysteme sind von einem solchen initialen Zugriff ausgeschlossen. Beispielsweise könnte in dem Sicherheitsmodul als Information eine eindeutige Kennung des ersten Computersystems wie dessen Name oder dessen öffentlicher Schlüssel hinterlegt sein. Das erste Computersystem kann sich dann mittels z.B. seines eigenen Zertifikats gegenüber dem Sicherheitsmodul als "echt" authentisieren.

In einem weiteren Aspekt betrifft die Erfindung ein Computerprogrammprodukt mit von einem Prozessor ausführbaren Instruktionen zur Durchführung der oben beschriebenen Verfahrensschritte.

Im Folgenden werden bevorzugte Ausführungsformen der Erfindung anhand der Zeichnungen näher erläutert. Es zeigen:
- Figur 1: ein Blockdiagramm eines Systems zur Implementierung des obig beschriebenen Verfahrens,
- Figur 2: ein Blockdiagramm eines Systems zur Kommunikation von Messdaten von Smart Metern,
- Figur 3: ein Flussdiagramm eines Verfahrens zur Initialisierung eines Speicherbereichs,
- Figur 4: ein Flussdiagramm eines Verfahrens zur Bereitstellung eines Sicherheitsmoduls.

Im Folgenden werden einander ähnliche Elemente mit gleichen Bezugszeichen gekennzeichnet.

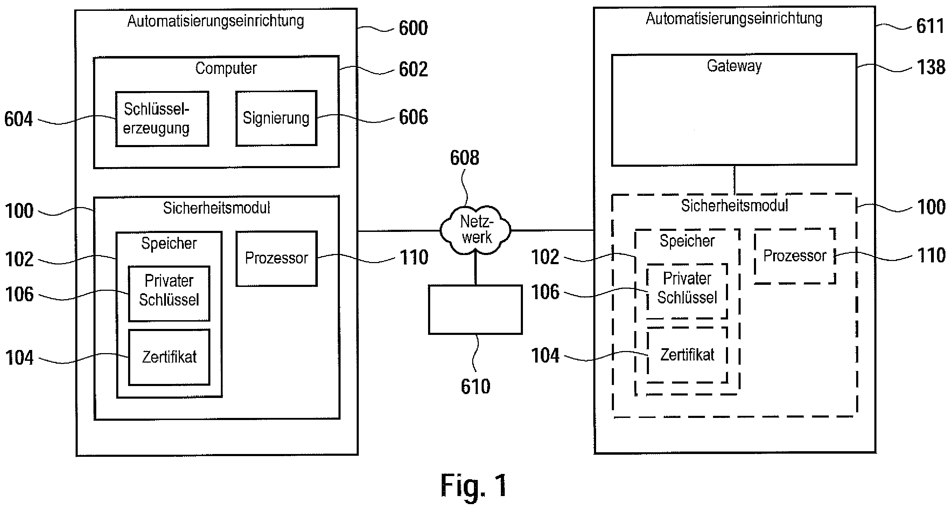

Die Figur 1 zeigt ein Blockdiagramm eines Anordnung von verschiedenen Automatisierungseinrichtungen zur Personalisierung von Sicherheitsmodulen. Im Folgenden sei lediglich die Variante der linken Seite der Fig. 1 betrachtet, bei welcher das Sicherheitsmodul 100 durch die Automatisierungseinrichtung 600 vollständig personalisiert wird.

Die Automatisierungseinrichtung 600 weist einen Computer 602 auf, welcher Module zur Schlüsselerzeugung 604 und Signierung 606 besitzt. Mittels des Moduls zur Schlüsselerzeugung 604 kann der Computer 602 asymmetrische kryptografische Schlüsselpaare erzeugen. Mittels des Moduls 606 zur Signierung kann der Computer 600 den mit Modul 604 erzeugten öffentlichen Schlüssel signieren, um damit ein Zertifikat 104 zu erzeugen. Hierzu kann das Modul 606 den erzeugten öffentlichen Schlüssel mit einem privaten Schlüssel der Automatisierungseinrichtung 600 verschlüsseln.

Nach Erzeugung der Schlüsselpaare kann insbesondere der private Schlüssel 106 in einem Speicher 102 des Sicherheitsmoduls 100 gespeichert werden, wobei sichergestellt sein muss, dass anschließend ein Auslesevorgang des privaten Schlüssels 106 von außerhalb des Sicherheitsmoduls 100 nicht mehr möglich ist. Dazu wird z.B. in einem separaten Schritt unmittelbar nach Speicherung des privaten Schlüssels 106 das Sicherheitsmodul 100 "abgeschlossen".

Das Zertifikat 104 wird vorzugsweise auf einem öffentlichen Verzeichnisserver 610 über das Netzwerk 608 abgelegt. Möglich ist jedoch auch, das Zertifikat direkt in dem Speicher 102 abzulegen.

Nach der Personalisierung des Sicherheitsmoduls 100 kann dieses in einem separaten Arbeitsschritt mit einem Smart Meter oder einem Smart Meter Gateway 138 verbaut werden. Dies muss nicht innerhalb der Automatisierungseinrichtung 600 erfolgen, sondern kann beispielsweise in der Automatisierungseinrichtung 611 vorgenommen werden. Durch den Einbau des Sicherheitsmoduls 100 in den Gateway 138 entsteht ein irreversibler logischer und gegebenenfalls auch physikalischer Bindungsprozess zwischen Gateway und Sicherheitsmodul. Dies wird im Detail weiter unten erläutert.

Alternativ zur bis dahin beschriebenen Vorgehensweise der Personalisierung ist es auch möglich, anstatt der Personalisierung "vor Ort" in der Automatisierungseinrichtung 600 die Personalisierung über das Netzwerk 608 in der Automatisierungseinrichtung 611 vorzunehmen. Hierzu ist in Fig. 1 auf der rechten Seite das Sicherheitsmodul 100 gestrichelt dargestellt. In diesem Fall erfolgt zwar nach wie vor die Erzeugung des asymmetrischen kryptografischen Schlüsselpaares durch den Computer 602. Allerdings erfolgt dann eine Übermittlung des privaten Schlüssels 106 an die Automatisierungseinrichtung 611 und damit den Speicher 102 des Sicherheitsmoduls 100 über eine kryptografisch gesicherte Kommunikationsverbindung unter Verwendung des Netzwerks 608.

Die beiden Automatisierungseinrichtungen 600 und 611 sind räumlich und logistisch voneinander getrennt. Bei beiden handelt es sich um "Automatisierungsanlagen", wobei jedoch eine räumlich vollkommen getrennte Kontrolle der jeweiligen Automatisierungsabläufe gegeben ist.

So könnte z.B. die Automatisierungseinrichtung 610 ein Fließband mit angelieferten Chipkarten aufweisen, welches unter Verwendung einer zentralen Steuerung innerhalb der Automatisierungseinrichtung 610 mit einem bestimmten Takt die einzelnen Chipkarten einem Chipkartenlese/schreibgerät zuführt. Die Chipkarten sind in diesem Fall die Sicherheitselemente. Das Chipkartenlese/schreibgerät führt dann die obig beschriebenen Schreibvorgänge des privaten Schlüssels 106 und gegebenenfalls des Zertifikats 104 auf der Chipkarte durch. Schließlich könnten die so personalisierten Chipkarten noch verpackt werden und für den Versand automatisiert bereitgestellt werden.

Davon vollkommen getrennt bietet die Automatisierungseinrichtung 611 die Möglichkeit, unter Verwendung einer ausschließlich für die Automatisierungseinrichtung 611 wirksamen zentralen Steuerungseinheit die Chipkarten nach Erhalt des Versands auszupacken und in entsprechende Gateways 138 zu verbauen.

Im Falle dessen die Sicherheitsmodule 100 in der Automatisierungseinrichtung 611 beschrieben werden, reduziert sich der Tätigkeitsbereich der Automatisierungseinrichtung 610 auf die Schlüsselerzeugung und Schlüsselübertragung an die Automatisierungseinrichtung 611. Die Automatisierungseinrichtung 611 übernimmt hingegen die obig beschriebenen Funktionen der Beschreibung der Chipkarten mit diesen Schlüsseln.

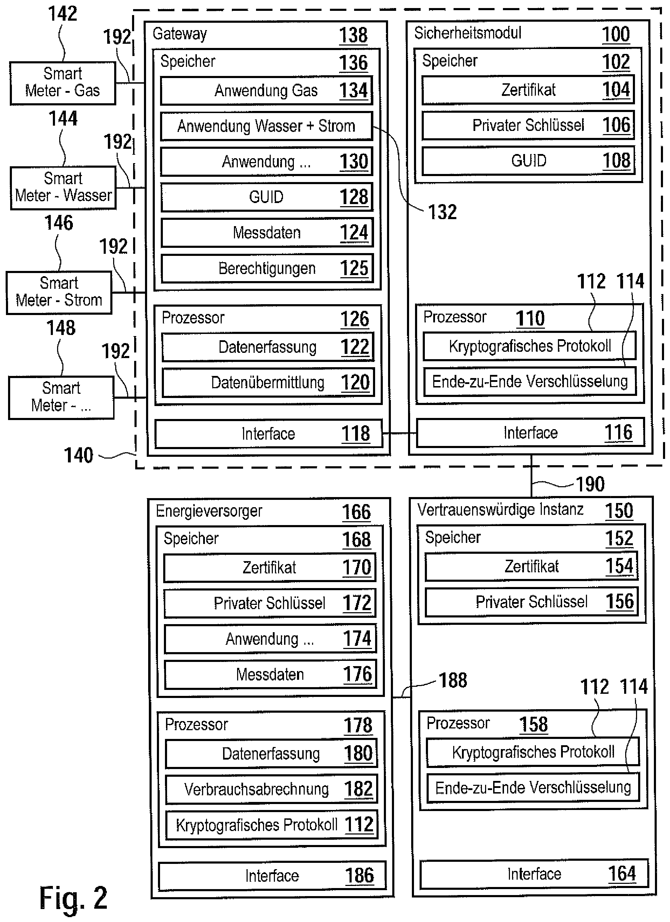

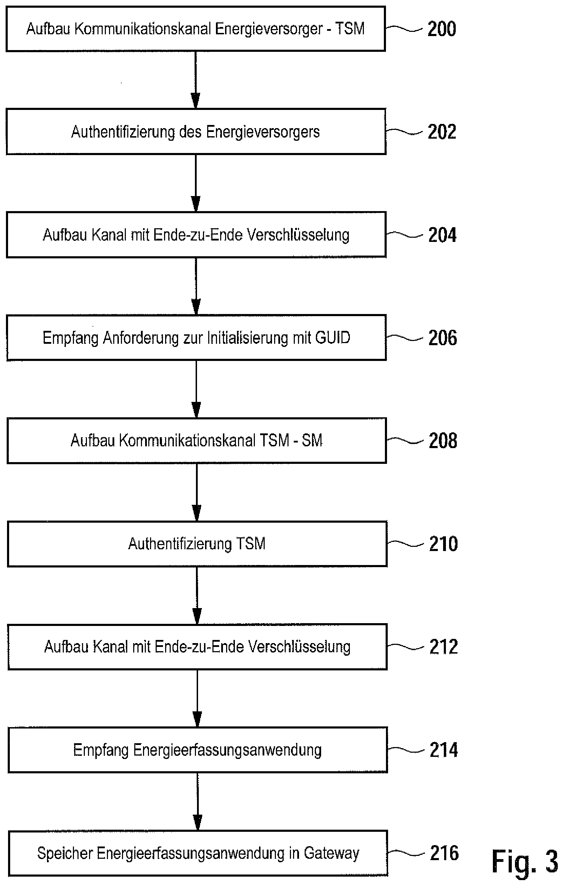

Die Figur 2 zeigt ein Blockdiagramm eines Gesamtsystems zur Initialisierung eines Speicherbereichs unter Verwendung der bezüglich Figur 1 beschriebenen Sicherheitsmodule 100. Zusammen mit den in Figur 3 gezeigten Verfahrensschritten zur Initialisierung eines Speicherbereichs soll im Folgenden ohne der Beschränkung der Allgemeinheit gezeigt werden, wie ein Speicherbereich 136 eines Gateways 138, welcher einer Vielzahl von Smart-Metern 142, 144, 146, 148 zugeordnet ist, initialisiert werden kann.

Die Smart-Meter 142 - 148 dienen dabei der Erfassung verschiedener Energieverbrauchswerte bezüglich zum Beispiel Gas (Smart-Meter 142), Wasser (Smart-Meter 144), Strom (Smart-Meter 146) und weiteren nicht näher spezifizierten Energieformen (Smart-Meter 148). Die Smart-Meter sind dabei über entsprechende Kommunikationsverbindungen 192 mit dem Interface 118 des Gateways 138 verbunden.

Es sei davon ausgegangen, dass ein Sicherheitsmodul 100 fest und untrennbar mit dem Gateway 138 verbunden ist, sodass insgesamt durch die Kombination des Gateways 138 und des Sicherheitsmoduls 100 eine untrennbare Einheit 140 gegeben ist. Der Gateway 138 und das Sicherheitsmodul 100 kommunizieren über jeweilige Interfaces 118 bzw. 116 miteinander. Über das Interface 116 findet ferner eine Kommunikation mit autorisierten Markteilnehmern und dritten Personen bzw. Instanzen statt, welche nicht innerhalb des durch die Einheit 140 und den Smart-Metern 142 - 148 gebildeten Netzwerks befindlich sind. Die Kommunikation zwischen Interface 116 des Sicherheitsmoduls 100 und weiteren Kommunikationsteilnehmern erfolgt dabei über eine Kommunikationsverbindung 190. Hierbei kann es sich beispielsweise um eine Powerline-Verbindung oder eine Kommunikationsverbindung über ein mobiles Telekommunikationsnetz oder das Internet handeln.

Das Sicherheitsmodul 100 hat den elektronischen Speicher 102 mit geschütztem Speicherbereich 106 und 108. Der geschützte Speicherbereich 106 dient zur Speicherung eines privaten Schlüssels des Sicherheitsmoduls 100 und der Speicherbereich 108 dient zur Speicherung einer Kennung des Sicherheitsmoduls "GUID" (Globally Unique Identifier). Bei dem GUID kann es sich beispielsweise um eine IPv6-Adresse des Sicherheitsmoduls 100 handeln. Die GUID kann z. B. durch die in Figur 1 beschriebene Automatisierungseinrichtung 610 erzeugt worden sein und im Rahmen des obig beschriebenen Verfahrens zur Speicherung des privaten Schlüssels 106 auf dem Sicherheitsmodul gespeichert worden sein. Der eigentliche Speichervorgang kann dabei entweder seitens der Automatisierungseinrichtung 610 oder seitens der Automatisierungseinrichtung 611 erfolgt sein.

Der elektronische Speicher 102 kann ferner den Speicherbereich 104 zur Speicherung eines Zertifikats aufweisen. Das Zertifikat beinhaltet einen öffentlichen Schlüssel, der dem in dem geschützten Speicherbereich 106 gespeicherten privaten Schlüssel zugeordnet ist. Das Zertifikat kann nach einem Public Key Infrastructure (PKI)-Standard erstellt worden sein, beispielsweise nach dem X.509-Standard.

Das Zertifikat muss nicht zwangsläufig mit dem elektronischen Speicher 102 des Sicherheitsmoduls 100 gespeichert sein. Alternativ oder zusätzlich kann das Zertifikat auch in einem öffentlichen Verzeichnisserver gespeichert sein, siehe Figur 1.

Das Sicherheitsmodul 100 hat einen Prozessor 110 zur Ausführung von Programminstruktionen 112 und 114. Durch Ausführung der Programminstruktionen 112 "kryptografisches Protokoll" wird beispielsweise eine Authentifizierung einer vertrauenswürdigen Instanz 150 oder eines Energieversorgers 166 gegenüber dem Sicherheitsmodul 100 ermöglicht. Bei dem kryptografischen Protokoll kann es sich beispielsweise um ein Challenge-Response-Protokoll basierend auf einem symmetrischen Schlüssel oder einem asymmetrischen Schlüsselpaar handeln.

Möglich ist natürlich auch eine gegenseitige Authentifizierung von Sicherheitsmodul und vertrauenswürdiger Instanz bzw. Energieversorger.

Die Programminstruktionen 114 dienen zur Ende-zu-Ende-Verschlüsselung von zwischen dem Sicherheitsmodul 100 und der vertrauenswürdigen Instanz 150 bzw. dem Energieversorger 166 zu übertragenden Daten. Für die Ende-zu-Ende-Verschlüsselung kann ein symmetrischer Schlüssel verwendet werden, der beispielsweise anlässlich der Ausführung des kryptografischen Protokolls zwischen dem Sicherheitsmodul 100 und den weiteren Teilnehmern 150 bzw. 166 vereinbart wird.

Ähnlich wie das Sicherheitsmodul 100 weist auch die vertrauenswürdige Instanz 150 einen elektronischen Speicher 152 und einen geschützten Speicherbereich 156 zur Speicherung eines privaten Schlüssels der vertrauenswürdigen Instanz auf. In dem Speicher 152 kann auch noch ein Zertifikat 154 der vertrauenswürdigen Instanz enthalten sein. Dieses Zertifikat kann jedoch ebenfalls auf einem zentralen Zertifikatserver gespeichert sein.

Ein Prozessor 158 der vertrauenswürdigen Instanz 150 weist wiederum die obig bezüglich des Sicherheitsmoduls 100 beschriebenen Programminstruktionen 112 und 114 zur Implementierung eines kryptografischen Protokolls und zur Durchführung einer Ende-zu-Ende-Verschlüsselung auf. Das kryptografische Protokoll und die Ende-zu-Ende-Verschlüsselung können zur Kommunikation über das Interface 164 mit dem Energieversorger 166 oder mit dem Sicherheitsmodul 100 verwendet werden. Das Zertifikat 154 beinhaltet wiederum einen öffentlichen Schlüssel, der dem in dem geschützten Speicherbereich 156 gespeicherten privaten Schlüssel zugeordnet ist.

Bei dem "Energieversorger" 166 handelt es sich um ein Computersystem des Energieversorgers, welches wiederum einen elektronischen Speicher 168 und einen Prozessor 178 aufweist. Ferner ist diesem Computersystem ein Interface 186 zugeordnet, über welches eine Kommunikation mit der vertrauenswürdigen Instanz 150 bzw. dem Sicherheitsmodul ermöglicht wird.

Der elektronische Speicher 168 des Energieversorgers 166 weist einen geschützten Speicherbereich 172 mit einem privaten Schlüssel auf, wobei der private Schlüssel einem öffentlichen Schlüssel zugeordnet ist, welcher in einem Zertifikat 170 ebenfalls im elektronischen Speicher 168 enthalten ist. Ferner ist im Speicher 168 ein Speicherbereich für eine oder mehrere Anwendungen vorgesehen, wobei diese Anwendungen beispielsweise eine entgeltrelevante Konfiguration des Gateways 138 ermöglichen. Ebenfalls im elektronischen Speicher 168 können Messdaten 176 gespeichert sein, welche zuvor von dem Gateway 138 empfangen wurden.

Der Prozessor 178 weist Programminstruktionen 180 zur Erfassung der durch den Gateway 138 gelieferten Verbrauchsdaten und des Weiteren optional zur Ausführung von Verfahrensschritten zur Verbrauchsabrechnung in Abhängigkeit von den ermittelten Messdaten (Programminstruktionen 182) auf. Die Programminstruktionen zur Ausführung von Schritten eines kryptografischen Protokolls 112 sowie nicht gezeigte Programminstruktionen zur Durchführung einer Ende-zu-Ende-Verschlüsselung können ebenfalls vorgesehen sein, wobei durch diese Programminstruktionen eine sichere Kommunikation mit der vertrauenswürdigen Instanz 150 bzw. dem Sicherheitsmodul 100 ermöglicht wird.

Soll nun ein Neukunde dem Energieversorger 166 zugeordnet werden, könnte beispielsweise nach einer ersten Installation der Smart-Meter 142 - 148 und der Bereitstellung von Gateway 138 mit Sicherheitsmodul 102 ein Initialisierungsvorgang des Sicherheitsmoduls stattfinden. Dieser Initialisierungsvorgang könnte dadurch angestoßen werden, dass der Neukunde (ein Endverbraucher) oder eine bestimmte technische Instanz, welche die Smart-Meter installiert hatte, dem Energieversorger 166 eine entsprechende Mitteilung hierüber erstatten. Diese Mitteilung sollte vorzugsweise die GUID 108 des Sicherheitsmoduls 100 umfassen, da dadurch eine eindeutige Identifizierung des Sicherheitsmoduls 100 gegenüber dem Energieversorger 166 möglich ist.

Nachdem der Energieversorger 166 diese Mitteilung über sein Interface 186, beispielsweise über eine Webschnittstelle einer entsprechende Webseite erhalten hat, baut der Energieversorger 166 einen Kommunikationskanal zur vertrauenswürdigen Instanz 150 auf. Dieser Schritt ist in Figur 3 mit Bezugszeichen 200 bezeichnet. Die vertrauenswürdige Instanz kann hierbei beispielsweise ein sogenannter "Trusted Service Manager TSM" sein, also eine behördlich zertifizierte Instanz, welche in elektronischen Kommunikationsprozessen die jeweilige Identität des Kommunikationspartners bescheinigt.

Es sei im Folgenden davon ausgegangen, dass die Automatisierungseinrichtung 600 bzw. deren Computer 602 grundsätzlich mit der vertrauenswürdigen Instanz 150 identisch ist.

Nach dem Aufbau des Kommunikationskanals in Schritt 200 erfolgt eine Authentifizierung des Energieversorgers 166 im Schritt 202. Hierzu wird das Zertifikat 170 des Energieversorgers durch die vertrauenswürdige Instanz 150 überprüft. Beispielsweise kann die vertrauenswürdige Instanz 150 bei positiver Zertifikatsüberprüfung ein Challenge-Response-Verfahren durchführen, bei welchem eine Zufallszahl erzeugt wird, welche mit einem im Zertifikat 170 beinhalteten öffentlichen Schlüssel des Energieversorgers 166 verschlüsselt wird und an den Energieversorger 166 übermittelt wird. Der Energieversorger 166 kann daraufhin mit seinem privaten Schlüssel 172 die Zufallszahl entschlüsseln und im Klartext zurücksenden. Stimmt die nun von der vertrauenswürdigen Instanz 150 empfangene Zufallszahl mit der zuvor beschriebenen Zufallszahl überein, ist die Authentizität des Energieversorgers 166 tatsächlich gesichert.

Nach Durchführung des Schritts 202 und dem optionalen Challenge-Response-Verfahren kann daraufhin in Schritt 204 ein Kanal mit Ende-zu-Ende-Verschlüsselung über die Kommunikationsverbindung 188 zwischen Energieversorgung 166 und der vertrauenswürdigen Instanz 150 aufgebaut werden. Hierbei können die Programminstruktionen 114 des Prozessors 158 der vertrauenswürdigen Instanz zum Einsatz kommen.

Nach Aufbau des Kanals in Schritt 204 empfängt die vertrauenswürdige Instanz 150 in Schritt 206 eine Anforderung zum Aufspielen einer Energieerfassungsanwendung 174 des Energieversorgers 166 und dem Speicher 136 des Gateways 138. Um den Speicher 136 bzw. den Gateway 138 eindeutig zu spezifizieren, wird mit der Anforderung zur Initialisierung des Speichers 136 auch die GUID 128 des Gateways 138, welche im Speicher 136 enthalten ist, an die vertrauenswürdige Instanz übermittelt. Vorzugsweise ist die GUID 128 des Speichers 136 identisch mit der GUID 108 des Speichers 102 des Sicherheitsmoduls 100.

Mit Empfang der GUID in Schritt 206 ist die vertrauenswürdige Instanz 150 in der Lage, eindeutig den gewünschten Gateway 138 zur Aufspielung der Anwendung 174 zu adressieren. Hierzu baut in einem nächsten Schritt 208 die vertrauenswürdige Instanz 150 über die Kommunikationsverbindung 190 einen Kommunikationskanal zum Sicherheitsmodul 100 auf. Die vertrauenswürdige Instanz 150 authentifiziert sich gegenüber dem Sicherheitsmodul 100, wobei die Authentifizierung nebst einer Überprüfung des Zertifikats 154 durch das Sicherheitsmodul beispielsweise wiederum ein Challenge-Response-Verfahren seitens des Sicherheitsmodul 100 umfasst. Hierzu könnte das Sicherheitsmodul 100 wiederum eine Zufallszahl erzeugen, mit dem öffentlichen Schlüssel der vertrauenswürdigen Instanz 150 verschlüsseln und an die vertrauenswürdige Instanz 150 senden. Die vertrauenswürdige Instanz 150 würde die verschlüsselte Zufallszahl mit ihrem privaten Schlüssel 156 entschlüsseln und die entschlüsselte Zufallszahl im Klartext zurück an das Sicherheitsmodul 100 senden. Stellt das Sicherheitsmodul fest, dass die so empfangene entschlüsselte Zufallszahl mit der ursprünglich seinerseits verschlüsselten Zufallszahl übereinstimmt, ist eine Authentifizierung der vertrauenswürdigen Instanz gegeben.

Das Verfahren setzt sich dann in Schritt 212 fort, nämlich den Aufbau eines Kommunikationskanals mit Ende-zu-Ende-Verschlüsselung zwischen der vertrauenswürdigen Instanz 150 und dem Sicherheitsmodul 100. Dies kann wiederum durch Verwendung der Programminstruktionen 114 des Prozessors 110 des Sicherheitsmoduls 100 erfolgen.

Im Schritt 214 empfängt das Sicherheitsmodul 100 die Energieerfassungsanwendung 174 von der vertrauenswürdigen Instanz.

An dieser Stelle sei angemerkt, dass es vorteilhaft sein kann, wenn beispielsweise die vertrauenswürdige Instanz die am häufigsten verschickten Energieerfassungsanwendungen in einem lokalen Speicher der vertrauenswürdigen Instanz vorrätig hält, sodass es nicht notwendig ist, bei Erschließung neuer Kunden ständig die Anwendungen 174 von dem Energieversorger 166 an die vertrauenswürdige Instanz 150 zu übertragen.

Nach Empfang der Energieerfassungsanwendung in Schritt 214 speichert das Sicherheitsmodul 100 die Anwendung in dem Speicher 136 des Gateways 138. Handelt es sich bei der Anwendung 174 beispielsweise um eine Anwendung, um Energieverbrauch bezüglich Wasser und Strom zu erfassen, so wird die Anwendung als die Anwendung 132 im Speicher 136 abgelegt. Diese Anwendung ist in der Lage, Energieverbrauchsdaten vom Smart-Meter 144 zu verarbeiten. Analog hierzu kann der Speicher 136 entsprechende Anwendungen für die Energieerfassung von Gas (134) sowie weitere Anwendungen 130 für die Erfassung weiterer Energieformen umfassen. Das Speichern der Energieerfassungsanwendung durch das Sicherheitsmodul 100 im Gateway 138 ist in Figur 2 durch den Schritt 216 gekennzeichnet.

Zusätzlich zu dem Empfang der Energieerfassungsanwendung in Schritt 214 durch das Sicherheitsmodul 100 ist es auch möglich, dass von der vertrauenswürdigen Instanz 150 Energieversorger-spezifische Berechtigungen oder genaue Spezifizierungen von Netzdatenelementen empfangen werden, welche ebenfalls in einem weiteren Bereich 125 des Speichers 136 abgelegt werden. Diese Berechtigungen oder Spezifizierungen von Messdatenelementen ermöglichen es, im Voraus festzulegen, welche Informationen der Energieversorger 166 von dem Gateway 138 überhaupt erhalten darf. Hierzu ist es beispielsweise möglich, dass vorab von der vertrauenswürdigen Instanz 150 für jeden Energieversorger spezifische Berechtigungen definiert werden, welche global für alle Energieversorger 166 gelten und welche grundsätzlich mit der Übertragung von Energieerfassungsanwendungen dem Sicherheitsmodul und damit dem Gateway 138 übermittelt werden.

Ebenfalls möglich ist es, dass Konfigurationsdaten von der vertrauenswürdigen Instanz 150 erhalten werden. Diese Konfigurationsdaten können dabei die technische Konfiguration der Smart Meter und/oder des Gateways betreffen.

Mittels der Programminstruktionen zur Datenerfassung 122 des Prozessors 126 ist nun der Gateway 138 in der Lage, Messdaten bezüglich eines Energieverbrauchs beispielsweise von dem Smart-Meter 144 und dem Smart-Meter 146 zu erfassen. Die entsprechenden Messdaten werden in dem Speicherbereich 124 des Speichers 136 abgelegt. Grundsätzlich bestehen die Messdaten 124 aus verschiedenen Messdatenelementen, welche beispielsweise umfassen können: Zeitpunkt der Erfassung der Messdaten, einzelne Messdatenpunkte zum jeweiligen Zeitpunkt, Informationen über das Zustandekommen der Messdaten (zum Beispiel Stromstärke, Spannung, Wasserdruck, Wassertemperatur, Gasdruck). Die Messdaten 124 können über die Anwendungen 130, 132 und 134 einer weiteren Auswertung unterzogen werden, woraus sich ausgewertete Messdaten ergeben, welche ebenfalls als "Messdatenelemente" im Speicherbereich 124 abgelegt werden können. Beispielsweise kann es sich bei den ausgewerteten Messdaten um akkumulierte Energieverbrauchswerte handeln.

Die obig beschriebenen Berechtigungen 125 bzw. die Spezifizierungen der Messdatenelemente ermöglichen es, von vornherein festzulegen, welche dieser Messdatenelemente 124 der Energieversorger 126 überhaupt abrufen darf. Ferner ermöglicht dies, von vornherein festzulegen, wie detailliert ein solches Abrufen erlaubt ist. Ein so detailliertes und zeitgenaues Abrufen der Messdaten 124 könnte dabei unerwünscht sein, da sich durch kurze Zeitintervalle von Messungen Erkenntnisse der Nutzung von elektronischen Geräten gewinnen und dadurch Benutzerprofile erstellt werden können, woran ein Endkunde jedoch gegebenenfalls kein Interesse haben könnte.

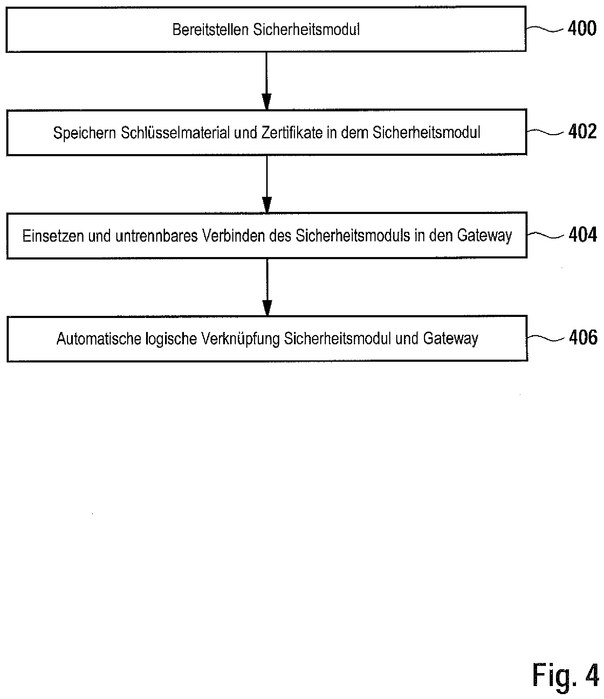

Wie bereits oben erwähnt, sind vorzugsweise das Sicherheitsmodul 100 und der Gateway 138 untrennbar miteinander verbunden. Beispielsweise bilden diese eine bauliche Einheit 140, wie dies in Figur 2 schematisch gezeigt ist. Um diese Einheit 140 zu erzeugen, könnten die in dem Flussdiagramm der Figur 4 erläuterten Verfahrensschritte durchgeführt werden.

In Schritt 400 wird zunächst das Sicherheitsmodul 100 bereitgestellt. Daraufhin erfolgt in Schritt 402 das Speichern von Schlüsselmaterial und/oder von Zertifikaten in dem Sicherheitsmodul. Beispielsweise könnte hierzu das Sicherheitsmodul eine entsprechende kryptografische Einheit aufweisen, mittels welcher selbständig der private Schlüssel 106 erzeugt wird. Alternativ ist es auch möglich, dass die vertrauenswürdige Instanz den privaten Schlüssel erzeugt und in dem Sicherheitsmodul in einem von außen nicht zugänglichen Speicherbereich ablegt. Der zu dem privaten Schlüssel gehörende öffentliche Schlüssel wird dem Zertifikat beigelegt, welches dann durch die vertrauenswürdige Instanz signiert wird und in dem Speicher 102 des Sicherheitsmoduls oder auf einem öffentlichen Verzeichnisserver abgelegt wird. Ferner können in Schritt 402 auch noch Kontaktinformationen der vertrauenswürdigen Instanz in dem Sicherheitsmodul gespeichert werden, wobei durch die Kontaktinformationen die Festlegung der Beschränkung des initialen Kommunikationszugriffs ausschließlich auf die vertrauenswürdigen Instanz erfolgt. D.h., ausschließlich die vertrauenswürdige Instanz ist in einem Initialisierungsschritt nach Speichern des Schlüsselmaterials in Schritt 402 in der Lage, erfolgreich auf das Sicherheitsmodul zuzugreifen.

Daraufhin wird das Sicherheitsmodul in Schritt 404 in das Gateway beispielsweise in Form einer Chipkarte eingesetzt und es wird ein untrennbares Verbinden von Sicherheitsmodul und Gateway vorgenommen. Beispielsweise könnten Sicherheitsmodul und Gateway elektronisch so aneinander gekoppelt werden, dass ein Entfernen des Sicherheitsmoduls vom Gateway zum automatischen Zerstören des Sicherheitsmoduls führen würde.

Nach Einsetzen des Sicherheitsmoduls in den Gateway 404 erfolgt im Schritt 406 eine automatische logische Verknüpfung von Sicherheitsmodul 100 und Gateway 138. Beispielsweise könnte dies dadurch erfolgen, dass die GUID 108 des Sicherheitsmoduls irreversibel in den Speicher 136 des Gateways 138 als GUID 128 geschrieben wird. Hierbei sollte seitens zum Beispiel des Sicherheitsmoduls 100 sichergestellt sein, dass eine Kommunikation mit dem Gateway 138 zur Bereitstellung von Messdatenelementen und über den Energieversorger 166 nur dann stattfindet, wenn eine Identität der GUID 108 und 128 gegeben ist.

Nun ist es z.B. möglich, nach erfolgreicher Authentifizierung der vertrauenswürdigen Instanz gegenüber dem Sicherheitsmodul Daten von vertrauenswürdigen Instanz durch das Sicherheitsmodul durch eine gesicherte Übertragung zu empfangen. Diese Daten können dann zur Initialisierung eines dem o.g. Gateways zugeordneten Speicherbereichs und Speicherung der Daten in dem Speicherbereich verwendet werden. Erst aufgrund der gespeicherten Daten ist nun überhaupt eine Kommunikation eines beliebigen anderen Computersystems eines Energieversorgers und/oder Messstellenbetreibers und dem Sicherheitsmodul unter Umgehung der vertrauenswürdigen Instanz möglich. Die gespeicherten Daten spezifizieren dabei dieses andere Computersystem. Durch die in dem Speicherbereich gespeicherten Daten wird also die Kommunikation mit dem anderen Computersystem freigeschaltet.

### Bezugszeichenliste

- 100: Sicherheitsmodul
- 102: Speicher
- 104: Zertifikat
- 106: privater Schlüssel
- 108: GUID
- 110: Prozessor
- 112: kryptographisches Protokoll
- 114: Ende-zu-Ende-Verschlüsselung
- 116: Interface
- 118: Interface
- 120: Datenübermittlung
- 122: Datenerfassung
- 124: Messdaten
- 125: Berechtigung
- 126: Prozessor
- 128: GUID
- 130: Anwendung
- 132: Anwendung
- 134: Anwendung
- 136: Speicher
- 138: Speicher
- 140: Einheit
- 142: Smart-Meter
- 144: Smart-Meter
- 146: Smart-Meter
- 148: Smart-Meter
- 150: vertrauenswürdige Instanz
- 152: Speicher
- 154: Zertifikat
- 156: privater Schlüssel
- 158: Prozessor
- 164: Interface
- 166: Energieversorger
- 168: Speicher
- 170: Zertifikat
- 172: privater Schlüssel
- 174: Anwendung
- 176: Messdaten
- 178: Prozessor
- 180: Datenerfassung
- 182: Verbrauchsabrechnung
- 186: Interface
- 188: Kommunikationsverbindung
- 190: Kommunikationsverbindung
- 192: Kommunikationsverbindung
- 600: Automatisierungseinrichtung
- 602: Computer
- 604: Modul zur Schlüsselerzeugung
- 606: Modul zur Signierung
- 608: Netzwerk
- 610: Verzeichnisserver
- 611: Automatisierungseinrichtung

## Patentansprüche

1. Verfahren zur Personalisierung eines Smart Meter oder Smart Meter Gateway Sicherheitsmoduls (100) durch ein erstes Computersystem (150), wobei durch das Smart Meter (142; 144; 146; 148) energieverbrauchsspezifische Messdatenelemente erfassbar sind, wobei das Sicherheitsmodul (100) kryptografische Funktionen zur Durchführung einer kryptografisch verschlüsselten Kommunikation der von dem Smart Meter (142; 144; 146; 148) oder dem Smart Meter Gateway (138) empfangenen Messdatenelemente mit einem zweiten Computersystem (166) eines Energieversorgers und/oder Messstellenbetreibers aufweist, wobei dem Sicherheitsmodul (100) eine eindeutige Kennung (128) zugeordnet ist, wobei das Verfahren die Schritte umfasst:
- Bereitstellen des Sicherheitsmoduls (100),
- Speicherung der Kennung (128) in dem Sicherheitsmodul (100),
- Erzeugung eines asymmetrischen kryptografischen Schlüsselpaares durch das erste Computersystem und Speicherung des Schlüsselpaares in dem Sicherheitsmodul (100),
- Signierung des öffentlichen Schlüssels des Schlüsselpaars und der Kennung (128) zum Erhalt eines Zertifikats und Speicherung des Zertifikats in dem Sicherheitsmodul (100), wobei die Signierung durch das erste Computersystem (150) erfolgt, wobei das Sicherheitsmodul (100) so ausgebildet ist, dass nach der Speicherung des Schlüsselpaars ein initialer Kommunikationszugriff auf den Smart Meter (142; 144; 146; 148) und/oder den Smart Meter Gateway (138) ausschließlich für das erste Computersystem (150) möglich ist, wobei durch den initialen Kommunikationszugriff durch das erste Computersystem (150) das Sicherheitsmodul (100) zur Kommunikation mit dem zweiten Computersystem (166) freigeschaltet werden kann,
- Einbau des Sicherheitsmoduls (100) in den Smart Meter (142; 144; 146; 148) oder den Smart Meter Gateway (138), wobei aufgrund des Einbaus ein irreversibler Bindungsprozess zwischen dem Sicherheitsmodul (100) und dem Smart Meter (142; 144; 146; 148) oder den Smart Meter Gateway (138) erfolgt, wobei aufgrund des Verbindens des Sicherheitsmoduls (100) mit dem Smart Meter (142; 144; 146; 148) oder dem Smart Meter Gateway (138) ein Verknüpfungsprozess auf dem Smart Meter (142; 144; 146; 148) oder dem Smart Meter Gateway (138) gestartet wird, wobei durch den Verknüpfungsprozess eine untrennbare logische Verknüpfung zwischen dem Sicherheitsmodul (100) und dem Smart Meter (142; 144; 146; 148) oder dem Smart Meter Gateway (138) hergestellt wird, wobei die untrennbare logische Verknüpfung einen irreversiblen Kopiervorgang des Zertifikats und/oder der eindeutigen Kennung (128) des Sicherheitsmoduls (100) auf einen Speicherbereich des Smart Meters (142; 144; 146; 148) oder des Smart Meter Gateways (138) umfasst.

2. Verfahren nach Anspruch 1, wobei das Zertifikat den öffentlichen Schlüssel des Sicherheitsmoduls (100) und die eindeutige Kennung (128) beinhaltet.

3. Verfahren nach Anspruch 1 oder 2, wobei es sich bei der Kennung (128) des Sicherheitsmoduls (100) um einen öffentlichen Schlüssel des Sicherheitsmoduls (100) oder eine IPv6-Adresse des Sicherheitsmoduls (100) handelt.

4. Verfahren nach einem der vorigen Ansprüche, wobei das erste Computersystem Teil einer geschützten und geschlossenen ersten Automatisierungseinrichtung (600) ist, wobei
- die Speicherung des Schlüsselpaares und/oder des Zertifikats und/oder der Kennung (128) auf dem Sicherheitsmodul (100) ebenfalls in der ersten Automatisierungseinrichtung (600) erfolgt oder
- die Speicherung des Schlüsselpaares und/oder des Zertifikats und/oder der Kennung (128) auf dem Sicherheitsmodul (100) in einer zweiten geschlossenen Automatisierungseinrichtung (611) erfolgt, wobei in diesem Fall das asymmetrische kryptografische Schlüsselpaar und/oder die Signatur und/oder die Kennung (128) von der ersten Automatisierungseinrichtung (600) an die zweite Automatisierungseinrichtung (611) über eine verschlüsselte Kommunikationsverbindung übertragen wird.

5. Verfahren nach Anspruch 4, wobei es sich bei der geschützten und geschlossenen ersten Automatisierungseinrichtung (600) um einen Trust Center handelt.

6. Verfahren nach einem der vorigen Ansprüche, wobei der Einbau des Sicherheitsmoduls (100) in den Smart Meter (142; 144; 146; 148) oder den Smart Meter Gateway (138) innerhalb der zweiten Automatisierungseinrichtung (611) erfolgt.

7. Verfahren nach einem der vorigen Ansprüche, wobei das bereitgestellte Sicherheitsmodul (100) unpersonalisiert ist, wobei erst aufgrund der Speicherung des Schlüsselpaares und/oder des Zertifikats in dem Sicherheitsmodul (100) eine Personalisierung des Sicherheitsmoduls (100) erfolgt.

8. Verfahren nach einem der vorigen Ansprüche, wobei das Sicherheitsmodul (100) in Form einer Chipkarte bereitgestellt wird.

9. Verfahren nach einem der vorigen Ansprüche, ferner mit dem Schritt der Speicherung von Kontaktinformationen des ersten Computersystems (150) in dem Sicherheitsmodul, wobei durch die Kontaktinformationen die Festlegung der Beschränkung des initialen Kommunikationszugriffs ausschließlich auf das erste Computersystem erfolgt.

10. Computerprogrammprodukt mit von einem Prozessor ausführbaren Instruktionen zur Durchführung der Verfahrensschritte gemäß einem der vorigen Ansprüche.

## Claims

1. A method for personalising a smart meter or smart meter gateway security module (100) by means of a first computer system (150), wherein energy consumption-specific measurement data elements are detectable by means of the smart meter (142; 144; 146; 148), wherein the security module (100) has cryptographic functions for carrying out a cryptographically encrypted communication of the measurement data elements received by the smart meter (142; 144; 146; 148) or the smart meter gateway (138) and a second computer system (166) of a utility company and/or meter operators, wherein the security module (100) is assigned a unique identifier (128), wherein the method comprises the following steps:
- providing the security module (100),
- storing the identifier (128) in the security module (100),
- generating an asymmetric cryptographic key pair by means of the first computer system and storing the key pair in the security module (100),
- signing the public key of the key pair and the identifier (128) to obtain a certificate and storing the certificate in the security module (100), wherein the signing is carried out by the first computer system (150), wherein the security module (100) is designed such that, once the key pair has been stored, an initial communication access to the smart meter (142; 144; 146; 148) and/or the smart meter gateway (138) is possible exclusively for the first computer system (150), wherein the security module (100) can be released for communication with the second computer system (166) by the initial communication access by the first computer system (150),
- installing the security module (100) in the smart meter (142; 144; 146; 148) or the smart meter gateway (138), wherein, on account of said installation, there is an irreversible binding process between the security module (100) and the smart meter (142; 144; 146; 148) or the smart meter gateway (138), wherein, on account of the connection of the security module (100) to the smart meter (142; 144; 146; 148) or the smart meter gateway (138), a linking process on the smart meter (142; 144; 146; 148) or the smart meter gateway (138) is started, wherein, by means of the linking process, an inseparable logical link is produced between the security module (100) and the smart meter (142; 144; 146; 148) or the smart meter gateway (138), wherein the inseparable logical link comprises an irreversible copying process of the certificate and/or the unique identifier (128) of the security module (100) to a memory region of the smart meter (142; 144; 146; 148) or the smart meter gateway (138).

2. The method according to claim 1, wherein the certificate includes the public key of the security module (100) and the unique identifier (128).

3. The method according to claim 1 or 2, wherein the identifier (128) of the security module (100) is a public key of the security module (100) or an IPv6 address of the security module (100).

4. The method according to any one of the preceding claims, wherein the first computer system is part of a protected and closed first automation device (600), wherein
- the key pair and/or the certificate and/or the identifier (128) are/is stored on the security module (100) likewise in the first automation device (600), or
- the key pair and/or the certificate and/or the identifier (128) is/are stored on the security module (100) in a second closed automation device (611), wherein in this case the asymmetric cryptographic key pair and/or the signature and/or the identifier (128) are/is transmitted from the first automation device (600) to the second automation device (611) via an encrypted communication connection.

5. The method according to claim 4, wherein the protected and closed first automation device (600) is a trust centre.

6. The method according to any one of the preceding claims, wherein the security module (100) is installed in the smart meter (142; 144; 146; 148) or the smart meter gateway (138) within the second automation device (611).

7. The method according to any one of the preceding claims, wherein the provided security module (100) is unpersonalised, wherein the security module (100) is personalised only on account of the storing of the key pair and/or the certificate in the security module (100).

8. The method according to any one of the preceding claims, wherein the security module (100) is provided in the form of a chip card.

9. The method according to any one of the preceding claims, further comprising the step of storing contact information of the first computer system (150) in the security module, wherein the limitation of the initial communication access exclusively to the first computer system is determined by the contact information.

10. A computer program product comprising instructions that can be executed by a processor in order to carry out the method steps according to any one of the preceding claims.

## Revendications

1. Procédé de personnalisation d'un module de sécurité (100) d'un compteur intelligent ou d'une passerelle de compteur intelligent par un premier système informatique (150), où des éléments de données de mesure spécifiques à une consommation d'énergie peuvent être détectés par le compteur intelligent (142; 144; 146, 148), où le module de sécurité (100) présente des fonctions cryptographiques pour l'exécution d'une communication chiffrée de manière cryptographique des éléments de données de mesure reçus par le compteur intelligent (142; 144; 146 ;148) ou par la passerelle de compteur intelligent (138) avec un deuxième système informatique (166) d'un fournisseur d'énergie et/ou d'un gestionnaire de points de mesures, où un identifiant unique (128) est associé au module de sécurité (100), où le procédé comprend les étapes :
- de mise à disposition du module de sécurité (100),
- de stockage de l'identifiant (128) dans le module de sécurité (100),
- de génération d'une paire de clés cryptographiques asymétrique par le premier système informatique et de stockage de la paire de clés dans le module de sécurité (100),
- de signature de la clé publique de la paire de clés et de l'identifiant (128) pour l'obtention d'un certificat et de stockage du certificat dans le module de sécurité (100), où la signature a lieu par le premier système informatique (150), où le module de sécurité (100) est conçu de telle manière qu'après le stockage de la paire de clés, un accès de communication initial sur le compteur intelligent (142; 144; 146 ; 148) et/ou sur la passerelle de compteur intelligent (138) est possible exclusivement pour le premier système informatique (150), où le module de sécurité (100) peut être libéré pour la communication avec le deuxième système informatique (166) par l'accès de communication initial par le premier système informatique (150),
- le montage du module de sécurité (100) dans le compteur intelligent (142 ; 144 ; 146 ; 148) ou dans la passerelle de compteur intelligent (138), où, en raison du montage, il se produit un processus de liaison irréversible entre le module de sécurité (100) et le compteur intelligent (142; 144; 146; 148) ou la passerelle de compteur intelligent (138), où, en raison de la connexion du module de sécurité (100) avec le compteur intelligent (142 ; 144 ; 146 ; 148) ou la passerelle de compteur intelligent (138), un processus d'interconnexion est démarré sur le compteur intelligent (142 ; 144 ; 146 ; 148) ou la passerelle de compteur intelligent (138), où une connexion logique inséparable est établie entre le module de sécurité (100) et le compteur intelligent (142; 144; 146; 148) ou la passerelle de compteur intelligent (138) par le processus d'interconnexion, où la connexion logique inséparable comprend un processus de copie irréversible du certificat et/ou de l'identifiant (128) unique du module de sécurité (100) sur une zone de mémoire du compteur intelligent (142; 144 ; 146 ; 148) ou de la passerelle de compteur intelligent (138).

2. Procédé selon la revendication 1, dans lequel le certificat contient la clé publique du module de sécurité (100) et l'identifiant (128) unique.

3. Procédé selon la revendication 1 ou la revendication 2, dans lequel, dans le cas de l'identifiant (128) du module de sécurité (100), il s'agit d'une clé publique du module de sécurité (100) ou d'une adresse IPv6 du module du module de sécurité (100).

4. Procédé selon l'une des revendications précédentes, dans lequel le premier système informatique constitue une partie d'un premier dispositif d'automatisation (600) sécurisé et fermé, où
- le stockage de la paire de clés, et/ou du certificat, et/ou de l'identifiant (128), sur le module de sécurité (100) a également lieu dans le premier dispositif d'automatisation (600), ou
- le stockage de la paire de clés, et/ou du certificat, et/ou de l'identifiant (128), sur le module de sécurité (100) a lieu dans un deuxième dispositif d'automatisation (611) fermé, où dans ce cas, la paire de clés asymétrique, et/ou la signature, et/ou l'identifiant (128), sont transmis du premier dispositif d'automatisation (600) vers le deuxième dispositif d'automatisation (611) par le biais d'une liaison de communication chiffrée.

5. Procédé selon la revendication 4, dans lequel, dans le cas du premier dispositif d'automatisation (600) sécurisé et fermé, il s'agit d'un centre de confiance.

6. Procédé selon l'une des revendications précédentes, dans lequel le montage du module de sécurité (100) dans le compteur intelligent (142; 144; 146 ; 148) ou dans la passerelle de compteur intelligent (138) a lieu à l'intérieur du deuxième dispositif d'automatisation (611).

7. Procédé selon l'une des revendications précédentes, dans lequel le module de sécurité (100) mis à disposition est non personnalisé, où, une personnalisation du module de sécurité (100) a lieu seulement en raison du stockage de la paire de clés, et/ou du certificat, dans le module de sécurité (100).

8. Procédé selon l'une des revendications précédentes, dans lequel le module de sécurité (100) est mis à disposition sous forme d'une carte à puce.

9. Procédé selon l'une des revendications précédentes, doté en outre de l'étape de stockage des informations de contact du premier système informatique (150) dans le module de sécurité, où la détermination de la limitation de l'accès de communication initial a lieu exclusivement vis-à-vis du premier système informatique par les informations de contact.

10. Produit-programme informatique doté d'instructions exécutables par un processeur destiné à la réalisation des étapes de procédé selon l'une des revendications précédentes.
